# EUROPEAN PATENT APPLICATION

(11) **EP 2 952 611 A1**
(43) Date of publication of application: **09.12.2015**
(21) Application number: 14778677.6
(22) Date of filing: 26.03.2014
(51) Int. Cl.: C23C 18/18, C23C 18/44, C23C 28/00, C25D 13/00, C25D 13/06

(54) **SILVER-PLATED STRUCTURE**

(30) Priority: 05.04.2013 JP 2013079778
(71) Applicant: Kayaba Industry Co., Ltd., Tokyo 105-6111 (JP)
(72) Inventor: OKAJIMA, Noriyuki, Tokyo 105-6111 (JP); KOUYAMA, Yoshiyuki, Tokyo 105-6111 (JP); KAWAMURA, Masatoshi, Nagoya-City Aichi 466-0046 (JP)
(74) Representative: Grünecker Patent- und Rechtsanwälte PartG mbB
(86) International application number: PCT/JP2014/058507
(87) International publication number: WO 2014/162946

(57) **Abstract**

A silver-plated structure formed on a surface of a metallic base material includes: a pretreatment layer formed by washing the surface of the base material with a pretreatment agent; a resin paint film layer formed on a surface of the pretreatment layer; and a silver plating layer formed on a surface of the resin paint film layer. The silver plating layer includes: a silver film formed by a silver mirror reaction; an undercoat film that causes the silver film to adhere to the surface of the resin paint film layer; and a topcoat film that protects a surface of the silver film.

## Description

### TECHNICAL FIELD

The present invention relates to a silver-plated structure in which a silver plating layer is formed on a surface of a base material.

### BACKGROUND ART

Conventionally, a silver-plated structure is known in which a silver plating layer is formed on a surface of a base material.

JP 2002-256454A discloses a silver-plated structure that is silver plated by forming a basecoat layer, a silver plating layer, and a topcoat layer on a surface of a base material made by injection molding of resin, such as acrylonitrile butadiene styrene (ABS) and polycarbonate (PC).

### SUMMARY OF INVENTION

In general, silver plating is applied to a resin base material. However, in a case where silver plating is applied to a metallic base material, it is difficult to achieve sufficient durability in practical use.

The present invention aims to improve the durability of a silver plating layer formed on a surface of a metallic base material.

According to one aspect of the present invention, a silver-plated structure formed on a surface of a metallic base material includes a pretreatment layer formed by washing the surface of the base material with a pretreatment agent, a resin paint film layer formed on a surface of the pretreatment layer, and a silver plating layer formed on a surface of the resin paint film layer. The silver plating layer includes a silver film formed by a silver mirror reaction, an undercoat film that causes the silver film to adhere to the surface of the resin paint film layer, and a topcoat film that protects a surface of the silver film.

### BRIEF DESCRIPTION OF DRAWINGS

Fig. 1 is a cross-sectional view of a silver-plated structure according to an embodiment of the present invention.
Fig. 2 illustrates a procedure for forming a pretreatment layer.
Fig. 3 illustrates a procedure for forming a resin paint film layer.

### DESCRIPTION OF EMBODIMENTS

The following describes a silver-plated structure 100 according to an embodiment of the present invention with reference to the drawings.

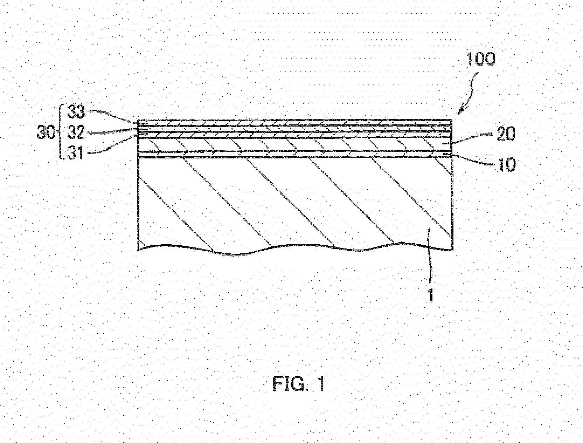

First, a configuration of the silver-plated structure 100 will be described with reference to Fig. 1.

The silver-plated structure 100 is formed on a surface of a base material 1. The base material 1 is made of metal, such as ferrous metal and an aluminum alloy. The silver-plated structure 100 includes a pretreatment layer 10, a resin paint film layer 20, and a silver plating layer 30. The pretreatment layer 10 is formed by washing the surface of the base material 1 with a pretreatment agent. The resin paint film layer 20 is formed on a surface of the pretreatment layer 10. The silver plating layer 30 is formed on a surface of the resin paint film layer 20.

In general, in a case where the silver plating layer 30 is formed directly on the metallic base material 1, it is difficult to achieve sufficient durability, e.g., adhesive force and rust prevention properties, in practical use. In view of this, in the silver-plated structure 100, the pretreatment layer 10 is first formed on the metallic base material 1 using the pretreatment agent, and then the silver plating layer 30 is formed via the resin paint film layer 20.

The pretreatment layer 10 is formed by a zinc phosphate coating treatment, an iron phosphate coating treatment or a chromium-free treatment, depending on the types of the base material 1. The pretreatment layer 10 improves the adhesive properties of the resin paint film layer 20 to adhere to the surface of the base material 1.

In a case where the base material 1 is made of ferrous metal, it is preferable that the pretreatment layer 10 be a coating formed by the zinc phosphate coating treatment. The zinc phosphate coating treatment uses a pretreatment agent containing phosphate ions and zinc ions as main components.

In a case where the base material 1 is made of an aluminum alloy, it is preferable that the pretreatment layer 10 be a coating formed by the chromium-free treatment. The chromium-free treatment uses a pretreatment agent containing zirconium and cobalt in place of hexavalent chromium.

The resin paint film layer 20 improves an adhesive force of the silver plating layer 30 to adhere to the pretreatment layer 10. The resin paint film layer 20 also reduces the flatness tolerance by smoothing the minute asperities present on the surface of the base material 1. The resin paint film layer 20 is formed by electrodeposition painting, solvent painting or powder painting, depending on the type and shape of the base material 1.

In a case where the base material 1 is made of ferrous metal, it is preferable that the resin paint film layer 20 be an electrodeposition paint film containing epoxy resin and pigments. In this case, some of the pigments have rust prevention properties. In this way, formation of the resin paint film layer 20 improves the rust prevention properties of the base material 1 made of ferrous metal. The types of pigments used in the electrodeposition paint film are selected as appropriate from among carbon black, rust prevention pigments, moisture resistant pigments, and the like, depending on the intended use.

In order to achieve the mirror surface effect by forming the silver plating layer 30 on a surface of the electrodeposition paint film, it is sufficient that the electrodeposition paint be formed of particles having a particle diameter of 20 µm or smaller. In general, particles forming an electrodeposition paint film-even small ones-have a particle diameter of up to 10 µm. In contrast, the resin paint film layer 20 is an electrodeposition paint film formed of finely-dispersed particles having a particle diameter of 5 µm or smaller. Therefore, the smaller the particle diameter of the particles, the smaller the flatness tolerance of the surface of the resin paint film layer 20. Accordingly, in a case where such an electrodeposition paint film is formed, a flat surface is obtained, adhesion of the silver plating layer 30 is facilitated, and a clear silver mirror can be obtained.

In a case where the base material 1 is made of an aluminum alloy, it is preferable that the resin paint film layer 20 be an acrylic resin paint film that is painted by using a solvent. In a case where the base material 1 is made of an aluminum alloy, rust prevention properties are not strongly required, and hence the acrylic resin paint film can be used as the resin paint film layer 20.

This paint film is formed of paint material for multi-layer finish containing acrylic emulsion resin as a main component. Acrylic silicone paint material is used as an overpaint agent therefor. In a case where the acrylic resin paint film is formed, a flat surface is obtained, adhesion of the silver plating layer 30 is facilitated, and a clear silver mirror can be obtained, similarly to a case where the electrodeposition paint film is formed.

The silver plating layer 30 includes a silver film 32, an undercoat film 31, and a topcoat film 33. The silver film 32 is formed by a silver mirror reaction. The undercoat film 31 causes the silver film 32 to adhere to the surface of the resin paint film layer 20. The topcoat film 33 protects a surface of the silver film 32.

The undercoat film 31 is formed of two-pack acrylic urethane resin paint material. The silver film 32 is formed by a silver mirror reaction whereby silver is deposited by heating an aqueous solution of a silver compound with a reducible organic compound added thereto. The topcoat film 33 is a baked paint film made of acrylic silicone resin.

By forming the resin paint film layer 20 below the silver plating layer 30 in the above-described manner, the adhesive properties of the silver plating layer 30 can be improved compared with a case in which the silver plating layer 30 is formed directly on the metallic base material 1. Therefore, the durability, e.g., the adhesive force and rust prevention properties of the silver plating layer 30 formed on the surface of the metallic base material 1 can be improved. This allows for outdoor use of the base material 1 with the silver-plated structure 100 formed thereon.

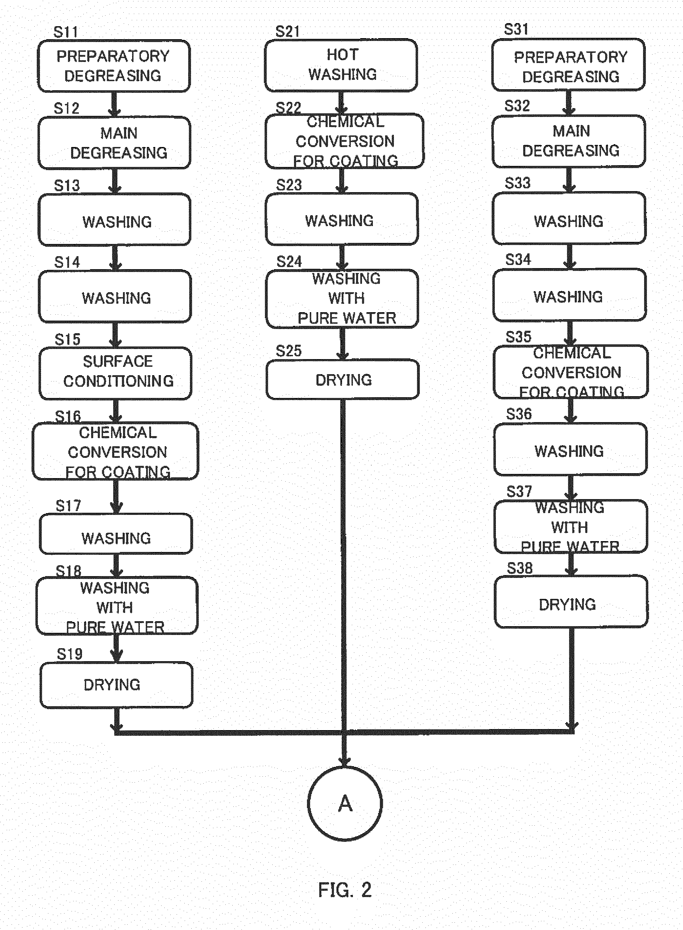

The following describes a procedure for forming the pretreatment layer 10 of the silver-plated structure 100 with reference to Fig. 2.

First, a procedure for forming the pretreatment layer 10 by the zinc phosphate coating treatment will be described with reference to step 11 to step 19 of Fig. 2.

The zinc phosphate coating treatment is one type of a chemical conversion treatment for a phosphate coating. Compared with the iron phosphate coating treatment, which will be described later, the zinc phosphate coating treatment yields superior adhesive properties of paint material and superior post-painting corrosion prevention properties. The zinc phosphate coating treatment is suitable when the base material 1 made of ferrous metal is used.

In step 11 and step 12, preparatory degreasing and degreasing are applied to the surface of the base material 1. Consequently, oil and foreign substances that have attached to the surface of the base material 1 are removed. An alkaline builder or a surface active agent, which is an alkaline washing auxiliary agent, is used as a solvent in degreasing.

In step 13 and step 14, water washing is performed in two stages. Consequently, oil and foreign substances that have attached to the base material 1, as well as the solvent used in degreasing, are washed away. Water washing is performed multiple times depending on the type and shape of the base material 1, the type of the solvent used in degreasing, and the like.

In step 15, surface conditioning is performed. In the process of surface conditioning, colloidal titanium, which will be the core of zinc phosphate applied in the next process of chemical conversion for a coating, is attached to the surface of the base material 1.

In step 16, zinc phosphate is attached and crystallized so as to cover the core, i.e., colloidal titanium that was attached to the surface of the base material 1 in the previous process of surface conditioning.

In step 17 and step 18, water washing is performed in two stages. Thereafter, in step 19, drying is performed. Consequently, the zinc phosphate coating is formed as the pretreatment layer 10 on the surface of the base material 1.

Next, a procedure for forming the pretreatment layer 10 by the iron phosphate coating treatment will be described with reference to step 21 to step 25 of Fig. 2.

The iron phosphate coating treatment is one type of a chemical conversion treatment for a phosphate coating. Compared with the above-described zinc phosphate coating treatment, the iron phosphate coating treatment requires low cost and low environmental burdens. The iron phosphate coating treatment is suitable when the base material 1 made of ferrous metal is used.

In step 21, hot washing is performed using water that has a higher temperature than water used in washing.

In step 22, phosphate is applied as a pretreatment agent in the form of, for example, a spray, and an amorphous iron phosphate coating is formed by the reaction of ferrous metal and phosphate. In the iron phosphate coating treatment, degreasing is performed using a surface active agent together with phosphate. That is to say, in step 22, degreasing is applied to the surface of the base material 1, and an iron phosphate coating is formed.

In step 23 and step 24, water washing is performed in two stages. Thereafter, in step 25, drying is performed. Consequently, the iron phosphate coating is formed as the pretreatment layer 10 on the surface of the base material 1.

Next, a procedure for forming the pretreatment layer 10 by the chromium-free treatment will be described with reference to step 31 to step 38 of Fig. 2.

The chromium-free treatment is a surface treatment that does not use chromium with high environmental burdens. The chromium-free treatment is suitable when the base material 1 made of an aluminum alloy is used.

In step 31 and step 32, preparatory degreasing and degreasing are applied to the surface of the base material 1. Subsequently, in step 33 and step 34, water washing is performed in two stages.

In step 35, a coating is formed on the surface of the base material 1 by a chemical conversion treatment using a pretreatment agent containing zirconium and cobalt.

In step 36 and step 37, water washing is performed in two stages. Thereafter, in step 38, drying is performed. Consequently, a chromium-free coating is formed as the pretreatment layer 10 on the surface of the base material 1.

In the foregoing types of formation of the pretreatment layer 10, the drying process is indispensable in a case where the resin paint film layer 20 is formed by powder painting, but is not necessary in a case where the resin paint film layer 20 is formed by electrodeposition painting and solvent painting.

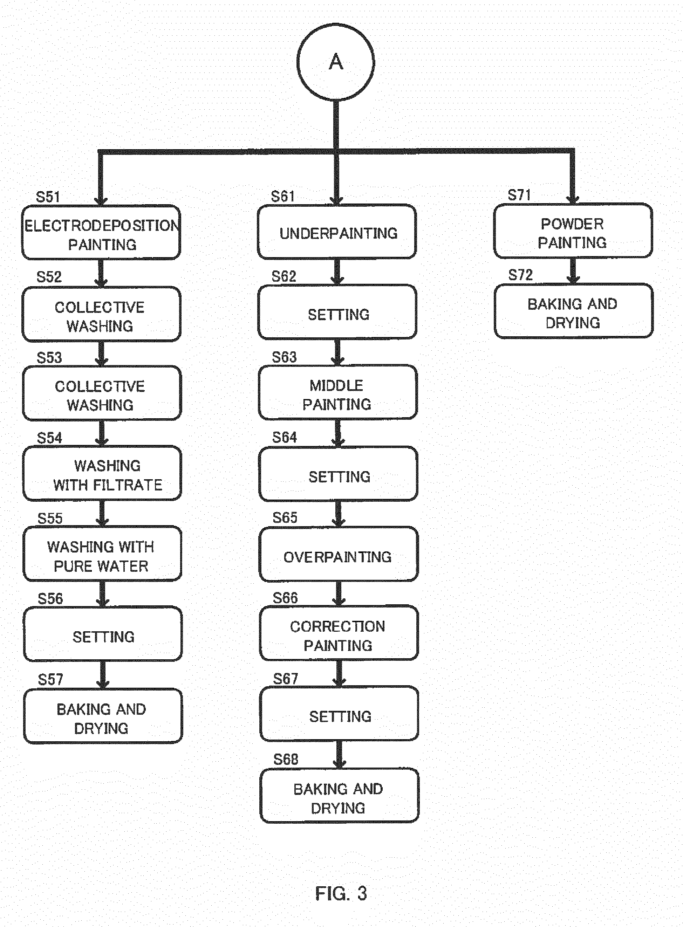

The following describes a procedure for forming the resin paint film layer 20 of the silver-plated structure 100 with reference to Fig. 3.

First, a procedure for forming an electrodeposition paint film as the resin paint film layer 20 by electrodeposition painting will be described with reference to step 51 to step 57 of Fig. 3.

There are following types of electrodeposition painting: anionic electrodeposition painting whereby an electrodeposition paint film of acidic resin is formed using an alkaline liquid, and cationic electrodeposition painting whereby an electrodeposition paint film of alkaline resin is formed using an acidic liquid. In general, in a case where the base material 1 is made of ferrous metal, the electrodeposition paint film is formed by cationic electrodeposition painting. On the other hand, in a case where the base material 1 is made of an aluminum alloy, the electrodeposition paint film is formed by anionic electrodeposition painting. The following describes a case in which cationic electrodeposition painting is applied to the surface of the base material 1 made of ferrous metal.

In step 51, an electrodeposition paint film is formed, by electrodeposition painting, on the pretreatment layer 10 formed on the surface of the base material 1. In electrodeposition painting, the base material 1 is placed in a tank containing positively-charged resin and pigments and negatively-charged acetic acid, and voltage is applied between a positive plate placed in the tank and the base material 1 constituting a negative electrode. Consequently, negatively-charged acetic acid is attracted to the positive plate, and positively-charged resin and pigments are deposited by attaching to the surface of the base material 1 constituting the negative electrode.

In steps 52 to 55, the base material 1 having the electrodeposition paint film formed on the surface thereof is washed in four stages. This washing is also performed multiple times depending on the type and shape of the base material 1, the type of a solvent used in electrodeposition painting, and the like.

In step 56, the base material 1 is set in preparation for the next baking and drying. In step 57, baking and drying are performed. Consequently, the electrodeposition paint film is formed as the resin paint film layer 20. The baking and drying are performed in accordance with the types of resin, pigments, and the like used in electrodeposition painting, for example, at a temperature of 150 °C to 200 °C for 10 minutes to 20 minutes.

Next, a procedure for forming an acrylic resin paint film as the resin paint film layer 20 by solvent painting will be described with reference to step 61 to step 68 of Fig. 3.

Solvent painting is a painting method whereby paint material, which is resin dissolved in a solvent, is applied to the surface of the base material 1 using an air gun or an electrostatic painting device. Examples of solvent painting include electrostatic painting using rotary atomization, electrostatic painting using air atomization, painting using air atomization, and airless painting.

From step 61 to step 66, underpainting, middle painting, and overpainting are performed in sequence using liquids. Instead of thus performing multiple painting processes, only one painting process may be performed depending on the result of a basecoat. In a case where the base material 1 is made of an aluminum alloy, an acrylic resin paint film is formed. This paint film is formed of paint material for multi-layer finish containing acrylic emulsion resin as a main component. Acrylic silicone paint material is used as an overpaint agent therefor.

In step 67, baking and drying are performed. Conditions related to the temperature and time of baking and drying are set in accordance with the type of resin used in solvent painting. Consequently, the paint film is formed as the resin paint film layer 20.

Next, a procedure for forming a powder paint film as the resin paint film layer 20 by powder painting will be described with reference to step 71 and step 72 of Fig. 3.

In step 71, powder painting is applied to the surface of the base material 1. In powder painting, in a case where the base material 1 is made of ferrous metal, the surface of the base material 1 is directly coated with granular epoxy resin. On the other hand, in a case where the base material 1 is made of an aluminum alloy, the surface of the base material 1 is directly coated with granular acrylic resin.

In step 72, baking and drying are performed in accordance with the type of resin used in powder painting. Conditions related to the temperature and time of baking and drying are set in accordance with the type of resin used in powder painting. Consequently, the powder paint film is formed as the resin paint film layer 20.

The above-described embodiment achieves the following effects.

By forming the resin paint film layer 20 below the silver plating layer 30, the adhesive properties of the silver plating layer 30 can be improved compared with a case in which the silver plating layer 30 is formed directly on the metallic base material 1. Therefore, the durability of the silver plating layer 30 formed on the surface of the metallic base material 1 can be improved. This allows for outdoor use of the base material 1 with the silver-plated structure 100 formed thereon.

Furthermore, when the base material 1 made of ferrous metal is used, an electrodeposition paint film containing epoxy resin and pigments is formed as the resin paint film layer 20. In this way, the rust prevention properties of the base material 1 can be improved. This electrodeposition paint film is formed of particles having a particle diameter of 5 µm or smaller. Therefore, the flatness tolerance of the surface of the resin paint film layer 20 can be reduced. Accordingly, a flat surface is obtained, adhesion of the silver plating layer 30 is facilitated, and a clear silver mirror can be obtained.

Embodiments of this invention were described above, but the above embodiments are merely examples of applications of this invention, and the technical scope of this invention is not limited to the specific constitutions of the above embodiments.

This application claims priority based on Japanese Patent Application No. 2013-079778 filed with the Japan Patent Office on April 5, 2013, the entire contents of which are incorporated into this specification.

## Claims

1. A silver-plated structure formed on a surface of a metallic base material, the silver-plated structure comprising:
a pretreatment layer formed by washing the surface of the base material with a pretreatment agent;
a resin paint film layer formed on a surface of the pretreatment layer; and
a silver plating layer formed on a surface of the resin paint film layer, wherein
the silver plating layer includes a silver film, an undercoat film, and a topcoat film, the silver film being formed by a silver mirror reaction, the undercoat film causing the silver film to adhere to the surface of the resin paint film layer, and the topcoat film protecting a surface of the silver film.

2. The silver-plated structure according to claim 1, wherein
the resin paint film layer is an electrodeposition paint film containing epoxy resin and a pigment.

3. The silver-plated structure according to claim 2, wherein
the electrodeposition paint film is formed of particles having a particle diameter of 5 11m or smaller.

4. The silver-plated structure according to claim 1, wherein
the base material is made of ferrous metal.

5. The silver-plated structure according to claim 1, wherein
the base material is made of an aluminum alloy, and
the resin paint film layer is an acrylic resin paint film painted by using a solvent.
